# EUROPEAN PATENT APPLICATION

(11) **EP 1 045 606 A2**
(43) Date of publication of application: **18.10.2000**
(21) Application number: 00303214.1
(22) Date of filing: 17.04.2000
(51) Int. Cl.: H04Q 7/38

(54) **Method and device for a multiple access wireless communication system**

(30) Priority: 15.04.1999 US 292524
(71) Applicant: Texas Instruments Incorporated, Dallas, Texas 75251 (US)
(72) Inventor: Robinson, Michael Lee, Arlington, Texas (US)
(74) Representative: Potter, Julian Mark

(57) **Abstract**

A method for assigning frequencies (132) and time slots (134) in a framed wireless communication system is disclosed. The method includes the steps of establishing a connection with the communication system, determining the first available frequency channel number (132) which is not already assigned to another user, and determining an available time slot (134) within the frequency channel (132) number that is not already assigned to a user. The same frequency channel (132) is assigned to the same user for second and subsequent calls. For concurrent multiple calls from the same user, each call is assigned a unique time slot (134) within a single frequency channel (132).

## Description

The invention relates in general to telecommunications and more specifically, but not exclusively to an optimal method for assigning frequency channels and time slots in a frequency division and time division multiple access wireless communication system.

Modern wireless communication systems utilize a combination of hardware facilities and software processes in order to allow a large number of users to access the system at the same time. Methods used include time division multiple access ("TDMA") and frequency division multiple access ("FDMA") techniques wherein the available communications bandwidth is allocated in terms of plurality of time slots and frequencies respectively on the same communications channel.

More recently with the advent of wireless framed communication systems, such as the Multiple Channel Multi-point Distribution Service ("MMDS") and Local Multi-point Distribution Service ("LMDS"), partitioning of the available bandwidth to provide reliable access by all users on the network has been a problem. In particular, prior framed wireless communication networks are channelized by frequency, meaning that if all time slots within a frequency are currently being used then a customer needing a second time slot would be locked out. In addition, since the calls or connections to the system are asynchronous, dynamic reallocation of a channel to any one user would result in loss of data or possible call disconnect. While processes and equipment can be used to synchronize channels and allow for frequency hopping, such methods are undesirable since they add delays to the communications session and are expensive to implement. Furthermore, the additional complexity associated with such methods and equipment increases the opportunity for problems across the network due to software glitches, maintenance, and other potential problematic conditions. Thus, the use of separate equipment and methods for call assignment in a framed wireless communication system has the potential of expanding the problems and decreasing the reliability of communications across the network.

In accordance with aspects of the present invention, the disadvantages and problems associated with prior methods and systems for assigning bandwidth in a framed wireless communication systems has been substantially reduced or eliminated.

According to one embodiment of the present invention, a method is provided for assigning frequencies and time slots in a framed wireless communication system. The method includes the steps of establishing a first connection with the system; determining the first available transmission resource available to the connection; and assigning the first available transmission resource to the connection.

The method can also include the further steps of establishing a second connection with the system; determining the next available transmission resource available to the second connection; and assigning the next available transmission resource to the second connection for communications with system.

According to a another embodiment, a method of assigning frequency channels and time slots in a multiple access wireless communications system is disclosed. The method includes the steps of initiating a first call to the system; establishing an off-network low bandwidth channel connection to the system; determining the first available frequency channel that can be assigned to the call; and determining the first available time slot within the first available frequency channel.

Also disclosed is a system for assigning frequency channels and time slots in a multiple access communications network. The system comprises a central office and a remote terminal communicably coupled to the central office and configured to support communications with the central office. A plurality of Customer Premise Equipment ("CPE") units, each having a transceiver enables each of the units to communicate with the central office. A base station also has a transceiver that supports communications between the CPE units and the central office. The base station is configured to assign transmission resources, including frequency channels and time slots to each CPE unit permitting communications with the central office.

Other advantages of embodiments of the invention including specific implementations will be understood by reference to the following detailed description, provided by way of example only, and taken in conjunction with the appended drawings, in which:
Figure 1 is a block diagram of a Local Multi-point Distribution Services System ("LMDS");
Figure 2 is a block diagram illustrating communication between elements of the LMDS services system during local origination call processing;
Figure 3 is a flow diagram of a method of allocating communication system resources during local origination call processing;
Figure 4 is a diagram illustrating frequency channel and time assignments according to one embodiment of the invention;
Figure 5 is a process flow diagram illustrating sequential assignment of frequency channel and time slots for a user making more than one calls to the LMDS network;
Figure 6 is a process flow diagram illustrating even distribution of time slots assignments among all frequency channels within the communication system; and
Figure 7 is a process flow diagram illustrating a method of call assignment and release with the LMDS network.

Numerals in the drawings correspond to corresponding parts in the detailed description unless otherwise indicated.

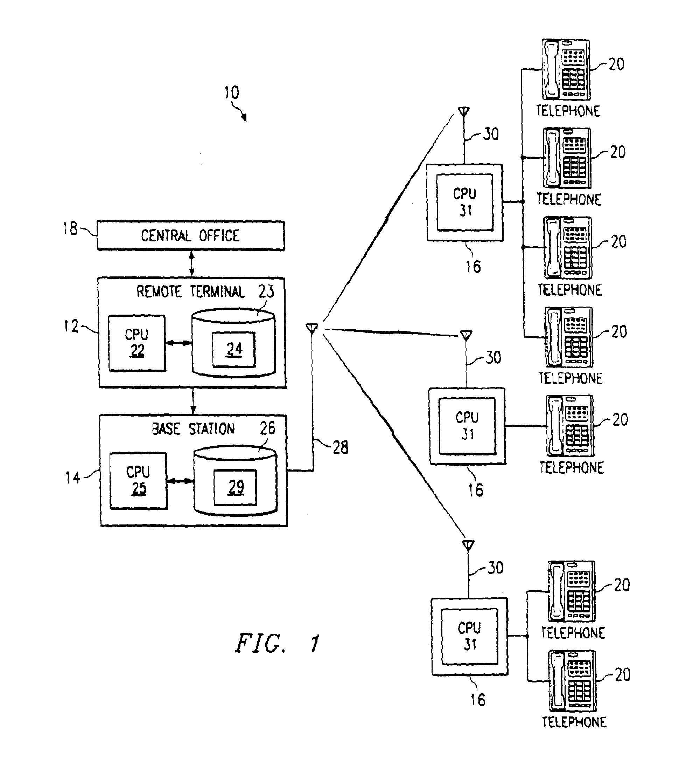

Figure 1 illustrates a framed wireless communications system 10 such as Local Multi-point Distribution Services ("LMDS"). The system 10 uses a Digital Loop Carrier ("DLC") remote terminal 12, a base station 14, and one or more Customer Premises Equipment ("CPE") units 16. Generally, in one embodiment, system 10 functions to provide or support bi-directional communication, such as voice and/or data telephony, between a central office 18 and one or more telephones 20.

In particular, system 10 can deliver telephone calls originating at a remote telephone coupled to central office 18 and directed to one of telephones 20, and also deliver telephone calls originating at one of telephones 20 and directed to a remote telephone coupled to central office 18. A remote telephone constitutes a far end device, whereas a telephone 20 constitutes a near end device. Transmission in the direction from far end to near end may be considered a downstream communication. Transmission from a near end device to far end device is considered an upstream communication. When a call has been terminated at the near end, an on-hook signal is generated at a telephone 20 and then relayed upstream to the system 10. When a call is terminated at the far end, a disconnect signal may be received from central office 18 downstream by system 10.

Within system 10, a given call, can be delivered over any of a number of time slots. In one embodiment, each call corresponds to a particular Digital Signal Level 0 ("DS-0") signal. Each time slot is contained within one of a number of frequencies and each frequency, in turn, provides a frequency channel used for an entire session. According to a Time Division Multiplexing ("TDM") scheme, multiple time slots are multiplexed into each frequency, so that each frequency may support a Digital Signal level 1 ("DS-1") signal. The frequencies and time slots constitute transmission resources which can be available for the delivery of any telephone call between central office 18 and telephones 20. The transmission resources are reused within system 10, and thus, are shared between telephones 20.

As shown, a remote terminal 12 is coupled to central office 18. Remote terminal 12 generally functions to support the communication of system 10 with the central office 18. Remote terminal 12 and central office 18 may communicate using a digital loop carrier signaling protocol. The remote terminal 12 may include a Central Processing Unit ("CPU") 22 coupled to a memory 23. CPU 22, which can be implemented as any processor running suitable software or an Application Specific Integrated Circuit ("ASIC"), performs the processing functionality of remote terminal 12, including all suitable processing for disconnect call processing.

Memory 23 may reside in a suitable storage medium, such as Random Access Memory ("RAM"), Read-Only Memory ("ROM"), disk, tape storage, or other suitable volatile or non-volatile data storage system. Memory 23 may include a database to store information 24 supporting call processing with various routines, techniques, processes, and applications. Information 24 may also specify which transmission resources (i.e., frequency and time slot) have been allocated for a particular call being delivered by system 10.

Base station 14 is coupled to, and may communicate with, remote terminal 12. Such communication may occur over a dedicated port, such as an RS-232 interface port. Base station 14 generally functions to assign and de-assign transmission resources for call delivery. Base station 14 may include a CPU 25, memory 26, and a transceiver 28. Like CPU 22 of remote terminal 12, CPU 25 of base station 14 can be implemented as any suitable processor running appropriate software. CPU 25 performs the processing functionality of base station 14, including the assignment and de-assignment of transmission resources.

Memory 26 is coupled to CPU 25 and may reside in a suitable storage medium, such as RAM, ROM, disk, tape storage, or other suitable volatile or non-volatile data storage system. Likewise, memory 26 may comprise a database containing information 28 specifying the transmission resources currently available for calls to the system 10 as well as the transmission resources currently being used for other telephone calls. Like information 24 contained within memory 23 of remote terminal 12, information 28 may also comprise software routines, techniques, methods, and applications supporting disconnect call processing.

Transceiver 28, which can be implemented as any suitable transceiver, functions to transmit and receive signals over the transmission resources. More specifically, transceiver 28 may transmit downstream at a particular frequency or range of frequencies. Such downstream frequency or range of frequencies may support a plurality of DS-1 signals, although in one embodiment, twenty-four (24) DS-1 signals are supported.

Transceiver 28 may also receive signals over a plurality of upstream frequencies or range of frequencies. Each upstream frequency or range of frequencies, which may have smaller bandwidth than the downstream frequency or range of frequencies, may support a single DS-1 signal. Apart from the upstream and downstream frequencies supporting DS-1 signals, transceiver 28 may also utilize a common control or out of bound channel to convey overhead information, such as an on-hook signal or handshake information. Typically, the overhead information is negotiated on a low bandwidth channel prior to call setup.

Each CPE unit 16 may be installed, maintained, and/or operated at an individual customer's premises, such premises being either commercial or residential. Each CPE unit 16 may be coupled to one or more telephones 20 with a hardwire connection. The number of CPE units 16 within system 10 may be adjusted according to the needs of a particular geographical area. For example, if a large number of customers are located in a given area, additional CPE units 16 can be provided. Furthermore, the number of telephones 20 coupled to a CPE unit 16 may vary according to the needs of the customer at whose site the CPE unit 16 is located. Each CPE unit 16 is operable to receive or detect an off-hook signal generated by any of the telephones 20 to which the CPE unit 16 is coupled where any one of the telephones 20 is used to place or call on the system 10.

As shown, each CPE unit 16 may include a transceiver 30 and a CPU 31. Transceivers 30 support communication with base station 14 over the transmission resources. In particular, transceivers 30 receive signals at the downstream frequency or range of frequencies broadcast by transceiver 28 of base station 14. Furthermore, in order to deliver a particular call, each transceiver 30 may be tuned to transmit at one of the upstream frequencies or range of frequencies. Transceivers 30 may communicate overhead information, including an off-hook signal, with base station 14 utilizing the out of bound channel. The information within the out of bound channel may be passed through base station 14 directly to remote terminal 12. Each CPU 31 performs the processing functionality for the CPE unit 16 within which it is contained. Each CPU 31 may be implemented as any suitable processor.

Generally, in operation, system 10 may receive a request for call delivery from either central office 18 or one of telephones 20. In response to such request, system 10 determines which transmission resources (i.e., frequencies and time slots) are made available to a user for purposes of a communications session. Thus, if any resources are available, base station 14 allocates a particular time slot and frequency for delivery. During delivery of the call, remote terminal 12 may perform normal call processing with central office 18.

System level call processing for both base station 14 and CPE units 16 are passed through. The call can be terminated at either the near end or the far end. For near end disconnect, system 10 receives an on-hook signal from telephone 20. For a far end disconnect, system 10 receives a disconnect signal from central office 18. In response to either of the on-hook signal or the disconnect signal, preferably system 10 performs the same disconnect call processing routine. During disconnect call processing, the time slot and frequency (that were previously allocated) are de-allocated so that these transmission resources can be reused during subsequent connections by the same or different user.

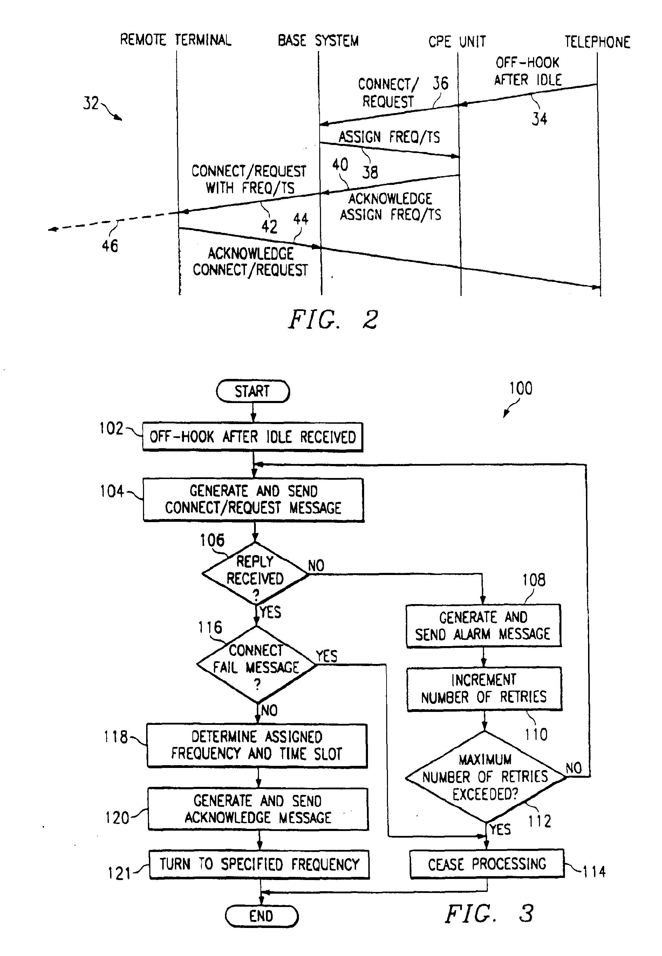

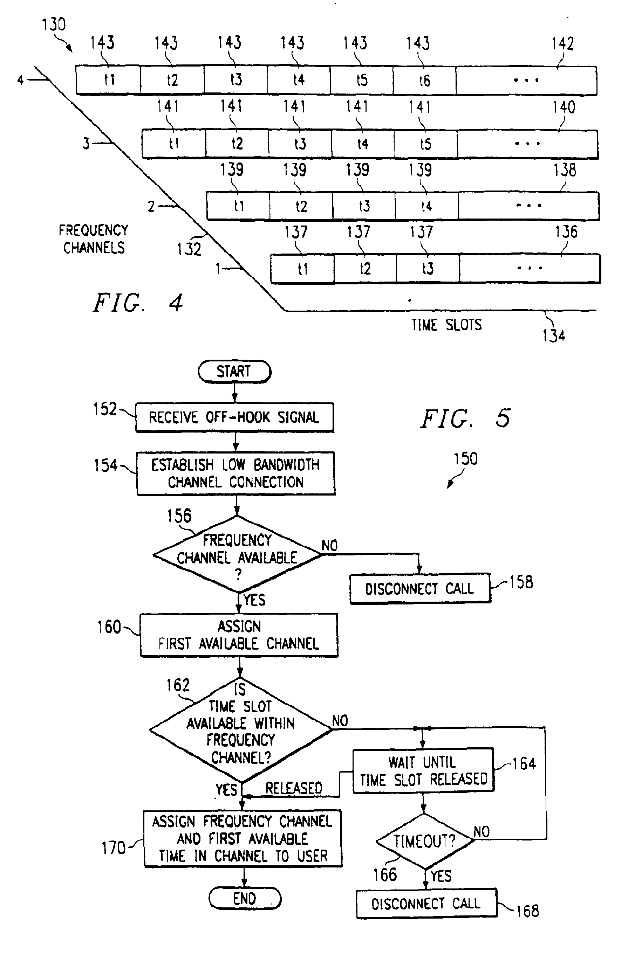

Figures 2 and 3 relate to the operation of system 10 as it may be used to perform processing for a call originating at one of telephones 20 coupled to a CPE unit 16. In one embodiment, hereinafter referred to as local origination call processing, a user of system 10 desires to call another user at a remote telephone coupled to central office 18. In other embodiments, a user of the system 10 desires to access a source of information such as the Internet, teleconferencing, or other information services available through LMDS.

Turning first to figure 2, a diagram 32 illustrating communication among remote terminal 12, base station 14, and one of CPE units 16 during local origination call processing is shown. Communications diagram 32 comprises a plurality of arrows 34 through 46, wherein each arrow represents transmission of a message or signal from one of the elements of system 10 to another element. The signaling and messaging represented by the arrows 34 through 46 are described in more detail with reference to figure 3.

Figure 3 is a flow diagram a method 100 for allocating transmission resources (i.e., frequency and time slot) in system 10 during local origination call processing. Method 100 begins at step 102 where a CPE unit 16 receives an off-hook after idle signal from a telephone 20 to which the CPE unit 16 is connected. An off-hook after idle signal indicates that a user, such as a customer, at telephone 20 desires to initiate a communications session. The off-hook after idle signal can be relayed by telephone 20 to CPE unit 16, as indicated by arrow 34 in figure 2.

In response to the off-hook after idle signal, CPE unit 16 generates and sends a connect/request message to base station 14 at step 104. The connect/request message may be relayed over a time slot dedicated for overhead signals. The transmission of the connect/request message corresponds to arrow 36 in figure 2.

At step 106, CPE unit 16 determines whether a reply has been received from base station 14. This reply may either be a connect-fail message or an assignment message. If no reply has been received, CPE unit 16 generates and sends an alarm message at step 108. The alarm message functions to alert an appropriate entity, such as a system administrator, that a problem has arisen in system 10.

At step 110, CPE unit 16 increments a number corresponding to the number of retries attempted by CPE unit 16 for the generation and transmission of a connect/request message. CPE unit 16 determines whether the maximum number of retries has been exceeded at step 112, which can be set by a user of the system 10. If the maximum number of retries has not been exceeded, CPE unit 16 returns to step 104 where it again generates and sends a connect/request message. On the other hand, if the maximum number of retries has been exceeded, CPE unit 16 ceases processing at step 114 and method 100 ends.

Referring again to step 106, if it is determined that a reply has been received from base station 14, CPE unit 16 determines whether the reply is a connect-fail message at step 116. A connect-fail message may indicate that either base station 14 or remote terminal 12 of system 10 is unable to make a connection for the call. In some cases, the connect-fail message may be generated when transmission resources, such as frequencies and/or time slot, are unavailable for communication between CPE unit 16 and base station 14. If at step 116 it is determined that the reply is a connect-fail message, CPE unit 16 ceases processing at step 114, and method 100 ends.

On the other hand, if the reply is not a connect-fail message, the message may be an assignment message, which is represented by arrow 38 in figure 2. An assignment message specifies the transmission resources (frequency and time slot) that have been assigned for communication between base station 14 and CPE unit 16 during the call. At step 118, base station 14 determines the assigned frequency and time slot. CPE unit 16 generates and sends an acknowledge message for the assignment at step 120. At step 121, CPE unit 16 tunes to the specified frequency, thus, enabling CPE unit 16 to communicate with base station 14 for the duration of the call session. Method 100 then ends.

Figure 4 is a diagram illustrating a method 130 of assigning multiple time slots 134 within any one of a plurality of frequency channels 132. As shown, the system 10 supports a plurality of frequency channels 132 for communications with the CPE units 16. Preferably, each CPE unit 16 can maintain a call session with the base station 14 using a unique assignment of frequency channel 132 and time slot 134. In one embodiment, a center frequency of 28 GHZ is used as specified by one variation of a LMDS wireless network protocol.

Typically, a specific frequency within the frequency channels 132 is assigned to a CPE unit 16 by the base station 14. The assignment occurs after an off-hook signal from a CPE unit 16 is sensed by the base station 14. Preferably, the off-hook signal is sent transparently through the system 10 to the service provider base station equipment. Next, the service provider base station equipment transmits an off-hook line grant which is sent back to the antenna equipment corresponding to a service area associated with a group of CPE units 16. The antenna equipment, in turn, communicates the line grant signal to the CPE units 16 acknowledging the customer and delivering the specific time slot 134 and frequency channel 132 allocated to it.

As shown, time slots 134 comprise a plurality of individual time slots with a single frequency channel 132. For example, for frequency channel 136, numerous time slots 137 are available for use by the total number of users in the system 10 as defined by the particular band plan. Preferably, the total number of users supported are related to the total number of frequency channels 132 and time slots 134. In one embodiment, 5,024 users per sector comprise the total available transmission spectrum within the range of a single base station 14. It should be understood, however, that more or less users may be allocated according to the available bandwidth of the system 10 and the particular band plan designated throughout the system 10.

In practice, negotiating a specific frequency channel 132 and time slot 134 for a connection is achieved using a low frequency out of band channel to determine the next available time slot 134 within one of the specific channels 132. For frequency channel 136, the available time slots 137 comprise a plurality of individual time slots so that each of the individual time slots are assigned in numerical order for that frequency channel 136. Thus, as CPE units 16 go off-hook, a time slot 137 is assigned in that frequency channel 136.

Preferably, time slots 137 are assigned in order of available precedence (t1, t2, then t3 . . .) within frequency channel 136 assuming another frequency channel (138, 140, 142, etc...) does not provide more bandwidth. Thus, for multiple off-hook signals generated at different CPE units 16 within the system 10, the logical assignments would be frequency channel 136 and the first unused time slot 137 (e.g. f1, t1). The next assignment would be frequency channel 138, time slot 1 (f2, t1) followed by frequency channels 140 and time slot 1 (f3, t1).

Thus, method 130 preserves as much unused bandwidth per frequency channel 132 to both individual customers within a given system 10 as well as to all customers within the system 10. For example, if only 4 time slots are allocated in frequency channel 136 and 5 time slots are allocated in frequency channel 138, then a time slot within frequency channel 136 would get assigned to the next CPE unit 16 within the system 10 generating an off-hook signal.

In one embodiment, a tracking routine is maintained in the base station 14 and operated by the CPU 25 to keep track of the number of time slots 134 currently assigned within each frequency channel 132. The tracking program permits precise determination of currently assigned frequency channels 132 and time slots 134 providing an efficient way of allocating system bandwidth both at the user level and across the entire system 10.

Preferably, the assigned frequency channel 132 and time slot 134 are stored at the customer's CPE unit 16 and used for all further communications for the duration of the connection. The CPE units 16 can incorporate a programmable memory function for this purpose with the stored frequency channel and time slot variables assigned by the base station 14. Thus, each connection by a CPE unit 16 to the base station 14 can be identified with a specific frequency channel 132 and time slot 134.

Turning now to figure 5, a process flow diagram of a method 150 for negotiating frequency channels 132 and time slots 134 is shown. Method 150 commences when the base station 14 senses an off-hook signal, step 152, to indicate a CPE unit 16 is wanting to gain access to the system 10. Next, in step 154, the base station 14 and CPE unit 16 establish an off-network low bandwidth connection in which the negotiations take place. The base station 14 determines if a frequency channel is available, step 156, within the system 10 as limited by total system bandwidth and the supported band plan across the system 10.

If all frequency channels and time slots in the band plan are already allocated to other CPE units 16 at the time the off-hook signal is sensed, step 152, the call is disconnected as shown in step 158. However, where a frequency channel is still available, process 150 is directed to step 160 wherein the first available frequency channel is allocated to the call. At this point, the base station 14 determines which time slots within the assigned frequency channel is available for assignment and if the next available time slot in that frequency channel, step 162.

In one embodiment, if no time slots are available, process 150 is directed to step 164 wherein the base station 14 can wait until a predetermined amount of time for a time slot in the chosen frequency channel to be released. A timeout, step 166, can control the wait period as determined by the system administrator or the service provider. Once the timeout limit of step 166 has been reached and no available time slot released, process is connected to step 168 wherein the call is disconnected. A message or other indicator can be published to the CPE unit 16 attempting to connect informing that the call be attempted at another time as all available bandwidth within the system has been allocated.

On the other hand, while the timeout, step 166, has not been reached, the system waits, step 164, until an available time slot is found. Once a time slot within the chosen frequency channel becomes available, process 150 is directed to step 170 wherein the first available time slot in the selected channel is assigned to the call, preferably in order of precedence. As shown, step 162 can likewise lead directly to step 170 where system usage is low or where time slots are directly available

Preferably, method 150 is used in conjunction with a digital framed network protocol. If so, a given telephone call can be delivered over any number of available time slots 134 corresponding to any number of available frequency channels 132. According to one time division multi-plexing scheme, multiple time slots are multi-plexed into each frequency so that each frequency may support a particular digital signal level 0 (ADS-1") signal. The frequencies in time slots constitutes transmission resources which can be available for the delivery of any telephone call between the central office 18 and telephones 20.

All further communications between the CPE unit 16 and the base station 14 continuing using the specified frequency channel and time slot within the frequency channel enabling the CPE unit to communicate with the base station 14 for the duration of the connection. Method 150 then ends.

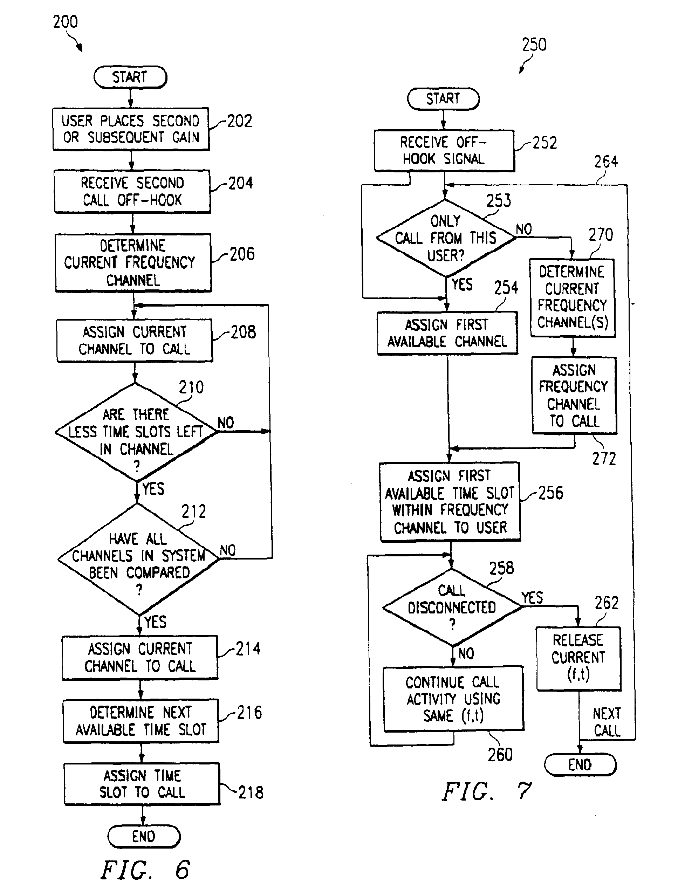

Turning now to figure 6, a process flow diagram for a method 200 used in assigning time slot and frequency channels to a second or subsequent call of a single user is shown. Method 200 begins where a user places a second or subsequent call to the base station 14, step 202. The base station 14 senses the second off-hook signal, step 204, from the user independent of other connections which may be on-going. Next, in step 206, the service provider determines what current frequency channel assigned to the user, step 206.

Preferably, the same frequency channel is assigned to a caller's second or subsequent permitting an efficient allocation of transmission resources across the system. The service provider may query the time slots within the indicated frequency channel, step 208, and determines if a time slot is available for subsequent calls from the same CPE unit 16, step 210. The call is disconnected where no time slots are available. Otherwise, an available time slot within the same frequency channel is assigned. In this way, multiple concurrent calls from the same user are assigned the same frequency channel ensuring maximum balance across the system.

In one embodiment once the time slot has been determined, process flow is directed to step 212 to determine if all channels in the sector have been queried and compared for maximum balance on the network. If so, process 200 is directed to step 214 wherein the current channel pointed to by the query mechanism is assigned to the next call from a different user and the next available time slot within that channel, step 216, is assigned to the call.

Preferably, the assigned frequency and time slot assignments (fn, tn) are transmitted to the antenna equipment for the sector and relayed to the users receiver set. Preferably, the assignment is maintained throughout the duration of the connection. Once the time slot has been assigned, step 218, method 200 ends. Tuming now to figure 7, a process flow diagram for a method 250 of managing available frequency channel and time slots in a given sector is shown. Method 250 begins when the base system 14 receiving an off-hook signal at step 252. Next, the base station 14 determines whether this is a first call from this particular user and if so, directs process 250 to step 254. Steps 254 and 256 are the results of process 150 as illustrated above in connection with figure 5.

Referring to step 254, the first available frequency channel within the system 10 is assigned to the call. Likewise, once a frequency channel has been assigned at step 256, the first available time slot within that frequency channel is assigned to the call permitting future communications between the CPE unit 16 and the base station 14 to occur using the assigned frequency channel and time slot (fn, tn). Process 250 is the directed to step 258 wherein further communication between the CPE unit 16 and the base station 14 continue as long as the call is not terminated. As shown in step 260, all further communications occur using the assigned frequency channel and time slot. Once a call is disconnected, process 250 is directed to step 262 wherein the assigned frequency channel and time slot are released for subsequent calls by the same or other users. Any further calls by the same user are directed through branch 264 to step 253 wherein the service provider determines if this is the only call from this user or if the user is currently engaged in other call sessions.

Wherein the user is engaged in more than one call session, process 250 is directed to step 270 where the base station 14 determines the current frequency channel assigned to the user for other connections. Next, in step 272, the base station 14 assigns that frequency channel according to methods 150 and 200. The end result of steps 270 and 272 is an allocation of frequency and time slot resources that maximizes overall network bandwidth over the network and with respect to a particular user.

Method 250 is directed to the step 256 where the first available time slot and the next available frequency channel is assigned and then ends.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

While the invention has been described in conjunction with preferred embodiments, it should be understood that modifications will become apparent to those of ordinary skill in the art and that such modifications are therein to be included within the scope of the invention and the following claims.

An embodiment of the invention comprises a programmable processing device such as a Digital Signal Processor, microprocessor or other processing device. The programmable processing device is configured by a computer program to operate in accordance with the foregoing described methods.

Suitably, the computer program is stored in machine or device readable form, for example in solid-state memory or magnetic memory such as disc or tape and the processing device utilises the program or a part thereof to configure it for operation. The computer program may be supplied from a remote source embodied in a communications signal such as an electronic signal, radio frequency carrier wave or optical carrier wave.

## Claims

1. A method of assigning transmission resources in a wireless communication system comprising the steps of:
(a) establishing a first connection with the system;
(b) determining the first available transmission resource available to said first connection; and
(c) assigning said first available transmission resource to said first connection.

2. The method of claim 1 further comprising the steps:
(a) establishing a second connection with the system;
(b) determining the next available transmission resource available to said second connection; and
(c) assigning said next available transmission resource to said second connection.

3. The method of claim 1 wherein the step of determining the first available transmission resource available to said first connection involves the steps of:
(a) determining the next available frequency available for said first connection; and
(b) determining the next available time slot within said next available frequency available for said first connection.

4. The method of claim 3 further comprising the steps of:
(a) establishing a second connection with the system;
(b) assigning said next available frequency for said first connection to said second connection with the system; and
(c) determining the next available time slot within said next available frequency for use by said second connection.

5. The method according to claim 1 further comprising the steps of:
(a) terminating said first connection; and
(b) releasing said first available transmission resource so that it is available for assignment to another connection.

6. The method according to claim 1 further comprising the step of maintaining the assignment associated with said first connection for the duration of the connection.

7. The method according to claim 2 further comprising the step of maintaining the assignment associated with said second connection for the duration of the connection.

8. The method according to claim 1 wherein the step of establishing a first connection with the system includes the steps of:
(a) transmitting an off-hook signal to the system; and
(b) waiting for an acknowledge signal from the system.

9. The method according to claim 1 further comprising the step of transmitting said first available transmission resource to a customer premise equipment unit on a low-bandwidth channel.

10. A method of assigning frequency channels and time slots in a multiple access wireless communications system, the method comprising the steps of:
(a) initiating a first call to the system;
(b) establishing an off-network low bandwidth channel connection to the system;
(c) determining the first available frequency channel that can be assigned to the call; and
(d) determining the first available time slot within said first available frequency channel.

11. The method according to claim 10 further comprising the step of transmitting said first available frequency channel and said first available time slot to a customer premise equipment unit.

12. The method according to claim 10 further comprising the steps of:
(a) transmitting said first available frequency channel and said first available time slot to a customer premise equipment unit on said low bandwidth channel connection; and
(b) tuning said customer premise equipment unit to said first available frequency channel.

13. The method according to claim 10 wherein the step of initiating a first call to the system includes the steps of:
(a) sending an off-hook signal to the system; and
(b) receiving an acknowledge signal from the system.

14. The method according to claim 10 further comprising the steps of:
(a) initiating a second call to the system;
(b) establishing a second low bandwidth channel connection to the system;
(c) assigning said first available frequency channel to said second call; and
(d) determining the next available time slot within said first available frequency channel available for used by said second call.

15. The method according to claim 14 further comprising the step of transmitting said first available frequency channel and said next available time slot to a customer premise equipment unit.

16. The method according to claim 14 further comprising the steps of:
(a) transmitting said first available frequency channel and said next available time slot to a customer premise equipment unit on said low bandwidth channel connection; and
(b) receiving information from said system during said next available time slot on said first available frequency channel.

17. The method according to claim 14 wherein the step of initiating a second call to the system includes the steps of:
(a) sending an off-hook signal to the system; and
(b) receiving an acknowledge signal from the system.

18. The method according to claim 14 further comprising the steps of:
(a) transmitting said first available frequency channel and said first available time slot to a first Customer Premise Equipment (ACPE@) unit associated with said first call;
(b) transmitting said first available frequency channel and said next available time slot to a second CPE unit associated with said second call;
(c) tuning said first CPE unit to said first available frequency channel;
(d) tuning said second CPE unit to said first available frequency channel;
(e) transmitting information to both said first CPE unit and said second CPE unit using frequencies and time slots corresponding to said first available frequency channel and said first available frequency channel and during said first available time slot and said next available time slot, respectively.

19. A system for assigning frequency channels and time slots in a multiple access communications network comprising:
a central office;
a remote terminal communicably coupled to said central office and configured to support communications with said central office;
a plurality of Customer Premise Equipment (ACPE@) units having a first transceiver for enabling communications with said central office; and
a base station having a second transceiver for supporting said communications between said plurality of CPE units and said central office, the base station configured to assign transmission resources that permit said communications.

20. The system according to claim 19 further comprising a telephone set coupled to each of said plurality of CPE units, each telephone set capable of generating an off-hook signal that is transmitted to at least one of said plurality of CPE units.

21. The system according to claim 19 wherein said base station further comprises:
a central processing unit; and
a database containing a record of all available transmission resources across the system, said database being read/write accessible by said central processing unit.

22. The system according to claim 21 wherein said transmission resources include all frequency channels and all time slots within said frequency channels supported by the system.

23. The system according to claim 19 wherein said base station is configured to negotiate an available transmission resource and assigning said available transmission resource to a specific one of said plurality of CPE units, the transmission resource used for all communications between said central office and said specific one of said plurality of CPE units.

24. A computer program comprising computer program means for configuring a processing device to implement a method according to any one of claims 1 to 19.

25. A computer program carrier medium embodying a computer program according to claim 24.
